# EUROPÄISCHE PATENTSCHRIFT

(11) **EP 2 644 645 B1**
(45) Veröffentlichungstag und Bekanntmachung des Hinweises auf die Patenterteilung: **16.03.2016**
(21) Anmeldenummer: 13001421.0
(22) Anmeldetag: 20.03.2013
(51) Int. Cl.: C08J 7/00

(54) **VERFAHREN ZUR HERSTELLUNG VON VERBUNDFOLIEN**
METHOD FOR THE PREPARATION OF COMPOSITE FILMS
PROCÉDÉ DESTINÉ À LA FABRICATION DE FEUILLES COMPOSITES

(30) Priorität: 28.03.2012 DE 102012006166
(43) Veröffentlichungstag der Anmeldung: 02.10.2013
(73) Patentinhaber: Renolit AG, 67547 Worms (DE)
(72) Erfinder: Masanek, Frank, 66879 Reichenbach (DE); Hennig, Detlef, 67069 Ludwigshafen (DE); De Man, Aren Joost, 55278 Eimsheim (DE); Sirlereaux, Serge, 67547 Worms (DE)
(74) Vertreter: Wagner, Jutta

(56) Entgegenhaltungen:
- EP-A1- 1 323 863
- EP-A1- 1 424 369
- WO-A1-00/19871
- WO-A1-01/38091
- WO-A1-2004/065467
- DD-A7- 289 183
- DE-C1- 10 001 210
- GB-A- 2 330 542

## Beschreibung

Die vorliegende Erfindung betrifft ein Verfahren zur Herstellung von Verbundfolien sowie damit hergestellte Verbundfolien.

Kunststofffolien sind heutzutage mittels verschiedener Verfahren in nahezu unbegrenzter Vielfalt herstellbar. Jedes Verfahren hat seine Vor- und Nachteile. Häufig können innerhalb eines festgelegten Kostenrahmens nicht alle Arten Folie in der gewünschten Qualität erhalten werden. Optisch aufwändig gestaltete Folien sind meist nur relativ kostenintensiv herstellbar und manche Eigenschaftskombinationen lassen sich kaum gemeinsam realisieren. So müssen Folien häufig elastisch bzw. dehnbar sein, was Probleme bereitet, wenn die Oberfläche metallisch aussehen soll.

Die gängigsten Verfahren zur Folienherstellung sind Blasextrusion, Gießverfahren und Kalandrieren. Blasfolien sind typischerweise kostengünstig, die Oberflächengüte und die Möglichkeiten zur optischen Gestaltung sind aber begrenzt. Gießfolien lassen sich ebenso wie Kalanderfolien mit sehr hoher Oberflächengüte herstellen. Kalanderfolien sind aber in der optischen Gestaltung ebenso wie Blasfolien begrenzt. Gießfolien sind darin variabler. Gießfolien werden aber teilweise aus in Lösungsmitteln gelösten oder suspendierten Polymerpartikeln erhalten. Lösemittel sind aus Umweltschutzgründen nicht erwünscht.

Es ist weiter bekannt, Folien im sog. Plastisolverfahren herzustellen. Hierbei werden PVC-Partikel zusammen mit den gewünschten Additiven, z.B. Füllstoffen, Pigmenten, Stabilisierem, Viskositätsreglern, Trennmitteln usw., in einem flüssigen Weichmacher zu einer flüssigen bis pastösen Masse vermischt. Plastisole können mit den an sich bekannten Verfahren der Beschichtung (z.B. Rakeln, Rollen, Sprühen) oder Formung (z.B. Tauchen, Rotationsformen, Gießen) verarbeitet werden. Werden dem Plastisol organische Lösemittel zur Erniedrigung der Viskosität beigemischt, so bezeichnet man sie als modifiziertes Plastisole. Sind die Harzpartikel und Additive in einem Lösungsmittel gelöst so spricht man von Organosol.

Folien aus Plastisol werden üblicherweise durch Auftragen des Plastisol auf eine ebene Oberfläche, z.B. Glas oder noch häufiger kalandrierte Folien, hergestellt. Das Plastisol wird nach dem Auftragen durch Einwirkung von Hitze geliert. Nach dem Abkühlen erhält man eine Folie, die in ihren physikalischen Eigenschaften mit einer durch Schmelzverarbeitung erzeugten Folie vergleichbar ist. Plastisole werden häufig für geschäumte Folien eingesetzt, z.B. als Teppichrücken oder bei Tapeten. Aufgrund der Anforderungen an die Fließfähigkeit sind Plastisolfolien teurer als Folien aus Schmelzverarbeitungsverfahren.

Es besteht daher ein Bedarf an weiteren Verfahren zur Herstellung von Folien.

Überraschend wurde nun gefunden, dass in der Optik und Oberflächengestaltung sehr variable Verbundfolien mittels Plastisolbeschichtung von kalandrierten Basisfolien erhalten werden können, insbesondere unter Verwendung von polymer weichgemachten Plastisolen ohne oder nur mit wenig Lösemittel.

Diese Folien weisen die mechanischen Eigenschaften der kalandrierten Basisfolie auf, können also insbesondere elastisch und/oder dehnbar sein, eine notwendige Reißfestigkeit, Steifigkeit, Brandverhalten etc. haben. So können erfindungsgemäße Verbundfolien eine Bruchdehnung von mindestens 100 %, eine Bruchspannung von mindestens 5 MPa und ein 10%-Modul von mindestens 10 N/15mm, jeweils nach DIN EN ISO 527-3/2/2, aufweisen.

Die Plastisolbeschichtung ergibt eine Folienlage, in welcher, aufgrund der im Vergleich zu der bei der Schmelzverarbeitung herrschenden niedrigeren Temperatur bei der Plastisolgelierung und der fehlenden mechanischen Belastung auch hitzeempfindliche und mechanisch instabile Pigmente und Farbstoffe verwendet werden können. Außerdem kann die Oberfläche, ebenfalls nahezu ohne Belastung durch Hitze und Druck, geprägt und dadurch mit einer gewünschten Struktur versehen oder mattiert werden. Erfolgt keine Prägung, ergeben sich besonders glatte, gleichmäßige Oberflächen mit sehr hohem Glanz. Weiterhin können in die noch nicht gehärtete Plastisolschicht Partikel wie Glasperlen, Fasern, Metallpigmente usw. eingebracht werden, die dann beim Gelieren in der Plastisolbeschichtung eingeschlossen oder an deren Oberfläche fixiert werden.

Der Folienverbund kann in an sich bekannter Weise mit einer Kleberschicht, z.B. aus einem Haftklebstoff, versehen werden. Die Kleberschicht wird üblicherweise mit einem Releaseliner abgedeckt. Die Kleberbeschichtung kann auch, sofern der Kleber die Härtungstemperaturen für das Plastisol verträgt, vor der Plastisolbeschichtung erfolgen.

Als Basisfolie, kommen kalandrierte Folien zum Einsatz, beispielsweise aus Polyvinylchlorid (PVC) oder aus Polyester. Die Eigenschaften der Basisfolie in Bezug auf Dehnbarkeit, Elastizität, Reißfestigkeit, Steifigkeit, Brandverhalten usw. lassen sich in weiten Grenzen durch das Material und Additive steuern. Die Dicke liegt üblicherweise im Bereich von 50 bis 500 µm, vorzugsweise im Bereich von 60 bis 200 µm.

Die Basisfolie kann farblos, gefärbt oder geprägt sein, auch eine Bedruckung ist möglich. Wenn die Plastisolschicht nicht transparent ist, können vorteilhaft auch Basisfolien aus recycliertem Material in neutraler Farbe zum Einsatz kommen.

Auf die Basisfolie wird ein Plastisol mittels den bekannten Verfahren aufgebracht, beispielsweise aufgerakelt. Das Plastisol wird dann durch Erhöhung der Temperatur auf 160 bis 220 °C, insbesondere 180 bis 210°C geliert.

Das erfindungsgemäße Plastisol umfasst PVC-Partikel, einen Weichmacher und hitze- oder druckempfindliche Pigmente und/oder hitze- oder druckempfindliche Füllstoffe. Es können monomere, polymere oder monomere und polymere Weichmacher verwendet werden. Polymere Weichmacher sind bevorzugt, insbesondere werden keine oder nur maximal 1 Gew.-% nicht-polymere Weichmacher eingesetzt. Organische Lösungsmittel sind vorzugsweise nicht enthalten und wenn sie enthalten sind, dann in sehr geringen Mengen von jeweils maximal 5 %, insbesondere jeweils maximal 1 %. Typischerweise enthält das Plastisol außerdem weitere Additive wie UV-Absorber, Thermostabilisatoren, Viskositätserniedriger etc. Das PVC kann sowohl ein Homopolymer als auch ein Copolymer, z.B. mit Ethylenvinylacetat (EVA) sein. Typi-scherweise weist das PVC K-Werte im Bereich von 60 bis 100 auf. Als Weichmacher sind vor allem Polyadipate, Polyphthalate oder Phthalate geeignet.

Als Pigmente und Füllstoffe eignen sich erfindungsgemäß auch solche, die bei einem Kalandrieren oder Extrudieren durch die dazu notwendigen hohen Temperaturen und die beachtlichen Scherkräfte zerstört werden würden oder andere negative Auswirkungen zeitigen. Das sind beispielsweise fluoreszierende Pigmente und metallische Pigmente. Selbstverständlich können und werden typischerweise erfindungsgemäß auch in Bezug auf Temperatur und/oder Druck stabile Pigmente und Füllstoffe mitverwendet.

Außerdem bietet das erfindungsgemäße Verfahren die Möglichkeit, Oberflächenstrukturen durch Einbetten von Partikeln in die Plastisolschicht zu erzeugen.

Ebenso lassen sich geprägte Oberflächen, sowohl Online als auch am Prägekalander für die Basisfolie herstellen.

Die Plastisolbeschichtung wird vorzugsweise in einer (gelierten) Dicke von 50 bis 200 µm, insbesondere von 60 bis 100 µm aufgebracht.

In einer ersten bevorzugten Variante wird eine Folie aus PVC kalandriert und dann mit einem Kleber beschichtet, der mit einem Releaseliner abgedeckt wird. Auf diese Basisfolie wird ein Plastisol aufgebracht und geliert. In dem Plastisol sind beispielsweise Metallic-Pigmente oder fluoreszierende Pigmente enthalten. Die Verbundfolie kann hochglänzend oder für eine matte bzw. strukturierte Oberfläche geprägt sein. Diese Folien eignen sich u.a. zur Herstellung von Hinweisschildern und Aufklebern. Es ist bevorzugt, wenn die Basisfolie aus PVC mit einem polymeren Weichmacher hergestellt ist, das PVC-Weichmacherverhältnis liegt vorzugsweise im Bereich von 65:45 bis 85:15, insbesondere bei etwa 74:26.

In die Oberfläche des Plastisol können auch vor dem Gelieren Partikel wie Glasperlen, Glaskörner, Metallpartikel, Fasern, Perlen u./o. Körner aus Siliziumkarbid u./o. Korund usw eingebracht werden, die dann beim Gelieren an der Oberfläche oder in der Palstisolschicht fixiert werden. Verwendet man Glasperlen mit 150 µm Durchmesser und eine Plastisolschichtdicke von 70 µm so erhält man eine Folie mit rauer Oberfläche, die sich beispielsweise für eine rutschfeste Ausrüstung von Oberflächen eignet.

In einer zweiten bevorzugten Variante wird ein Plastisol auf einer Träger- und Schutzfolie geliert, die eine glatte oder geprägte Oberfläche haben kann. Das Plastisol kann opak, durchscheinend, fluoreszierend, transparent, glitzernd etc. sein. Die Plastisolschicht wird dann mit einer kalandrierten Folie im Prägewerk laminiert. Anschließend kann eine Kleberschicht mit/ohne Releaseliner aufgebracht werden. Die Träger-und Schutzfolie wird erst bei der Endanwendung abgezogen, so dass die hochwertige Oberfläche der Plastisolschicht geschützt bleibt.

Die erfindungsgemäße Plastisolverbundfolie kann auch vorteilhaft als Dekorfolie, z.B. Deckenbespannfolie oder Werbefolie etwa für Messen, als Beschichtungs- bzw. Laminierfolie für Fensterbänke, Fußböden oder Leinwände, als Kaschierfolie und als Möbelfolie eingesetzt werden, sowohl mit Kleber bzw. Primer als auch ohne Kleber.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Eine Basisfolie mit der in Tabelle 1 angegebenen Rezeptur wurde in an sich bekannter Weise auf einem Kalander erzeugt.

**Tabelle 1**

| Komponente | Menge |
|---|---|
| PVC K-Wert 65 | 74,0 kg/l |
| Fließhilfe | 1,9 kg/l |
| polymerer Weichmacher | 23,0 kg/l |
| sekundärer Weichmacher | 3,0 kg/l |
| Stabilisator | 3,0 kg/l |
| UV-Absorber | 1,0 kg/l |
| Antiblockmittel | 0,2 kg/l |

### Beispiel 2

Die Basisfolie aus Beispiel 1 wurde mit der in Tabelle 2 angegebenen Plastisolrezeptur, welche einerseits mit Glasperlen und Glaskorn und andererseits mit Metallicpigment gemischt wurde, beschichtet und das Plastisol geliert.

**Tabelle 2**

| Komponente | Menge |
|---|---|
| PVC | 69,5 kg/l |
| polymerer Weichmacher | 23,5 kg/l |
| sekundärer Weichmacher | 3,2 kg/l |
| monomerer Weichmacher | 3,8 kg/l |
| Stabilisator | 2,3 kg/l |
| Viskositätserniedriger | 4,3 kg/l |
| UV-Absorber | 1,8 kg/l |

Die Verbundfolie mit Glasperlen/Korn hatte eine Dicke von 300 µm und ein Flächengewicht von 250 g/m². Außerdem wurden die folgenden mechanischen Eigenschaften bestimmt: Bruchdehnung 120 %, Bruchspannung 6 MPa und 10%-Modul 15 N/15mm, jeweils gemessen nach DIN EN ISO 527-3/2/200. Die Folie wies eine gute Rutschfestigkeit auf, bei der Rutschprüfung in Anlehnung an die BAM-Methode ergaben sich folgende Werte: trocken 50 cm, nass 55 cm.

Die Verbundfolie mit Metallicpigmenten besaß eine Dicke von 200 µm und ein Flächengewicht von 250 g/m². Die mechanischen Eigenschaften waren: Bruchdehnung 200%, Bruchspannung 17 MPa, 10%-Modul 15 N/15mm, jeweils nach DIN EN ISO 527-3/2/200.

### Beispiel 3

Die Basisfolie aus Beispiel 1 wurde mit der in Tabelle 3 angegebenen Plastisolrezeptur, welche mit Metallicpigment gemischt wurde, beschichtet und das Plastisol geliert.

**Tabelle 3**

| Komponente | Menge |
|---|---|
| PVC | 70 kg/l |
| polymerer Weichmacher | 25,5 kg/l |
| monomerer Weichmacher | 1 kg/l |
| Stabilisator | 2,5 kg/l |
| Co-Stabilisator | 3,5 kg/l |
| Viskositätserniedriger | 9 kg/l |
| UV Absorber | 1,5 kg/l |

Die Verbundfolie besaß eine Dicke von 200 µm und ein Flächengewicht von 250 g/m². Die mechanischen Eigenschaften waren: Bruchdehnung 200%, Bruchspannung 17 MPa, 10%-Modul 15 N/15mm, jeweils nach DIN EN ISO 527-3/2/200.

## Patentansprüche

1. Verfahren zur Herstellung von Verbundfolien umfassend die Schritte:
• Bereitstellung einer kalandrierten Basisfolie,
• Beschichten der Basisfolie mit einem Plastisol, das PVC-Partikel, Weichmacher und hitze- und/oder druckempfindliche Pigmente und/oder hitze- und/oder druckempfindliche Füllstoffe, die bei einem Kalandrieren oder Extrudieren durch die dazu notwendigen hohen Temperaturen und die beachtlichen Scherkräfte zerstört werden würden, enthält, und
• Gelieren des Plastisols.

2. Verfahren zur Herstellung von Verbundfolien umfassend die Schritte:
• Bereitstellung einer kalandrierten Basisfolie,
• Beschichten eines Trägers mit einem Plastisol, das PVC-Partikel, Weichmacher und hitze- und/oder druckempfindliche Pigmente und/oder hitze- und/oder druckempfindliche Füllstoffe, die bei einem Kalandrieren oder Extrudieren durch die dazu notwendigen hohen Temperaturen und die beachtlichen Scherkräfte zerstört werden würden, enthält,
• Gelieren des Plastisols, und
• Laminieren des Plastisols mit der Basisfolie.

3. Verfahren gemäß Anspruch 1 oder 2, **dadurch gekennzeichnet, dass** die Verbundfolie vor oder nach dem Beschichten oder Laminieren mit dem Plastisol mit einer Kleberschicht versehen wird.

4. Verfahren gemäß mindestens einem der Ansprüche 1 bis 3, **dadurch gekennzeichnet, dass** als Material der Basisfolie PVC oder Polyester gewählt wird.

5. Verfahren gemäß mindestens einem der Ansprüche 1 bis 4, **dadurch gekennzeichnet, dass** Pigmente oder Füllstoffe oder Pigmente und Füllstoffe vor dem Gelieren in die Plastisolschicht eingebracht und/oder auf die Plastisolschicht aufgebracht werden.

6. Verfahren gemäß mindestens einem der Ansprüche 1 bis 5, **dadurch gekennzeichnet, dass** das Plastisol bezogen auf sein Gesamtgewicht vor dem Gelieren maximal 1 Gew.-% organische Lösungsmittel, vorzugsweise keine organischen Lösungsmittel, enthält.

7. Verfahren gemäß mindestens einem der Ansprüche 1 bis 6, **dadurch gekennzeichnet, dass** das Plastisol polymere Weichmacher und maximal 1 Gew.-% nicht-polymere Weichmacher enthält.

8. Verfahren gemäß mindestens einem der Ansprüche 1 bis 7, **dadurch gekennzeichnet, dass** das Plastisol bei 160 bis 220 °C geliert wird.

9. Verfahren gemäß mindestens einem der Ansprüche 1 bis 8, **dadurch gekennzeichnet, dass** das Plastisol durch Streichen aufgebracht wird oder die Beschichtung mit dem Plastisol mittels Beschichtungswalze erfolgt.

10. Verfahren gemäß mindestens einem der Ansprüche 1 bis 9, **dadurch gekennzeichnet, dass** die Plastisolschicht geprägt wird.

11. Verfahren gemäß mindestens einem der Ansprüche 1 bis 10, **dadurch gekennzeichnet, dass** als hitze- und/oder druckempfindliche Pigmente und/oder hitze- und/oder druckempfindliche Füllstoffe Metallicpigmente, fluoreszierende Pigmente, Glasperlen, Glaskörner, Metallpartikel, Fasern, Perlen und/oder Körner aus Siliziumkarbid und/oder Korund verwendet werden.

12. Verbundfolie umfassend eine kalandrierte Basisfolie und eine Plastisolschicht, welche hitze- und/oder druckempfindliche Pigmente und/oder hitze- und/oder druckempfindliche Füllstoffe, die bei einem Kalandrieren oder Extrudieren durch die dazu notwendigen hohen Temperaturen und die beachtlichen Scherkräfte zerstört werden würden, enthält.

13. Verbundfolie gemäß Anspruch 12, **dadurch gekennzeichnet, dass** die Verbundfolie eine Bruchdehnung von mindestens100 %, eine Bruchspannung von mindestens 5 MPa und ein 10%-Modul von mindestens 10 N/15mm, jeweils nach DIN EN ISO 527-3/2/2, aufweist.

14. Verbundfolie gemäß Anspruch 12 oder 13, **dadurch gekennzeichnet, dass** sie Metallicpigmente oder fluoreszierende Pigmente enthält.

15. Verbundfolie gemäß mindestens einem der Ansprüche 12 bis 14, **dadurch gekennzeichnet, dass** sie Glasperlen und/oder Glaskorn, vorzugsweise mit einem mittleren Durchmesser oberhalb der gelierten Plastisolschichtdicke, als Füllstoff enthält.

## Claims

1. Method for the production of composite films, comprising the steps:
- providing a calendered base film,
- coating the base film with a plastisol which contains PVC particles, plasticisers and heat- and/or pressure-sensitive pigments and/or heat- and/or pressure-sensitive fillers which would be destroyed during calendering or extruding by the high temperatures necessary for this and the considerable shear forces, and
- gelling the plastisol.

2. Method for the production of composite films, comprising the steps:
- providing a calendered base film
- coating a carrier with a plastisol which contains PVC particles, plasticisers and heat- and/or pressure-sensitive pigments and/or heat- and/or pressure-sensitive fillers which would be destroyed during calendering or extruding by the high temperatures necessary for this and the considerable shear forces,
- gelling the plastisol, and
- laminating the plastisol with the base film.

3. Method according to claim 1 or 2, **characterised in that** the composite film is provided with an adhesive layer before or after coating or laminating with the plastisol.

4. Method according to at least one of claims 1 to 3, **characterised in that** PVC or polyester is selected as the material of the base film.

5. Method according to at least one of claims 1 to 4, **characterised in that** pigments or fillers or pigments and fillers are introduced into the plastisol layer and/or are applied onto the plastisol layer before gelling.

6. Method according to at least one of claims 1 to 5, **characterised in that** before gelling, the plastisol contains a maximum of 1% by weight organic solvent, preferably no organic solvent, with regard to its total weight.

7. Method according to at least one of claims 1 to 6, **characterised in that** the plastisol contains polymer plasticisers and a maximum of 1 % by weight non-polymer plasticisers.

8. Method according to at least one of claims 1 to 7, **characterised in that** the plastisol is gelled at 160 to 220°C.

9. Method according to at least one of claims 1 to 8, **characterised in that** the plastisol is applied by painting or the coating with plastisol occurs by means of coating rollers.

10. Method according to at least one of claims 1 to 9, **characterised in that** the plastisol layer is embossed.

11. Method according to at least one of claims 1 to 10, **characterised in that** metallic pigments, fluorescent pigments, glass beads, glass grains, metal particles, fibres, beads and/or grains of silicon carbide and/or corundum are used as heat- and/or pressure-sensitive pigments and/or heat- and/or pressure-sensitive fillers.

12. Composite film comprising a calendered base film and a plastisol layer which contains heat- and/or pressure-sensitive pigments and/or heat and/or pressure-sensitive fillers which would be destroyed during calendering or extruding by the high temperatures necessary for this and the considerable shear forces.

13. Composite film according to claim 12, **characterised in that** the composite film has an elongation at break of at least 100%, a breaking stress of at least 5MPa and a 10% modulus of at least 10N/15mm, each according to DIN EN ISO 527-3/2/2.

14. Composite film according to claim 12 or 13, **characterised in that** it contains metallic pigments or fluorescent pigments.

15. Composite film according to at least one of claims 12 to 14, **characterised in that** it contains glass beads and/or glass grains, preferably having an average diameter above the gelled plastisol layer thickness, as a filler.

## Revendications

1. Procédé de fabrication de feuilles composites comprenant les étapes suivantes consistant à :
- préparer une feuille de base calandrée,
- revêtir la feuille de base avec un plastisol contenant des particules de PVC, des plastifiants et des pigments sensibles à la chaleur et/ou à la pression et/ou des matières de charge sensibles à la chaleur et/ou à la pression, qui seraient détruit(e)s lors d'un calandrage ou d'une extrusion par les températures élevées nécessaires pour cela et les forces de cisaillement considérables, et
- gélifier le plastisol.

2. Procédé de fabrication de feuilles composites comprenant les étapes suivantes consistant à :
- préparer une feuille de base calandrée,
- revêtir un support avec un plastisol qui contient des particules de PVC, des plastifiants et des pigments sensibles à la chaleur et/ou à la pression et/ou des matières de charge sensibles à la chaleur et/ou à la pression, qui seraient détruit(e)s lors d'un calandrage ou d'une extrusion par les températures élevées nécessaires pour cela et les forces de cisaillement importantes,
- gélifier le plastisol, et
- stratifier le plastisol avec la feuille de base.

3. Procédé selon la revendication 1 ou 2, **caractérisé en ce que** la feuille composite est munie d'une couche de collage avant ou après le revêtement ou la stratification avec le plastisol.

4. Procédé selon l'une quelconque des revendications 1 à 3, **caractérisé en ce que** du PVC ou du polyester est choisi comme matériau de la feuille de base.

5. Procédé selon l'une quelconque des revendications 1 à 4, **caractérisé en ce que** des pigments ou des matières de charge ou des pigments et des matières de charge sont introduit(e)s dans la couche de plastisol et/ou appliqué(e)s sur la couche de plastisol avant l'étape de gélification.

6. Procédé selon l'une quelconque des revendications 1 à 5, **caractérisé en ce que** le plastisol contient, par rapport à son poids total avant l'étape de gélification, au plus 1 % en poids de solvants organiques, de manière préférée aucun solvant organique.

7. Procédé selon l'une quelconque des revendications 1 à 6, **caractérisé en ce que** le plastisol contient des plastifiants polymères et au plus 1 % en poids de plastifiants non polymères.

8. Procédé selon l'une quelconque des revendications 1 à 7, **caractérisé en ce que** le plastisol est gélifié entre 160 et 220°C.

9. Procédé selon l'une quelconque des revendications 1 à 8, **caractérisé en ce que** le plastisol est appliqué par enduction ou le revêtement avec le plastisol a lieu au moyen de cylindres de revêtement.

10. Procédé selon l'une quelconque des revendications 1 à 9, **caractérisé en ce que** la couche de plastisol est estampée.

11. Procédé selon l'une quelconque des revendications 1 à 10, **caractérisé en ce que** des pigments métalliques, des pigments fluorescents, des perles de verre, des grains de verre, des particules métalliques, des fibres, des perles et/ou des grains en carbure de silicium et/ou en corindon sont utilisés en tant que pigments sensibles à la chaleur et/ou à la pression et/ou matières de charge sensibles à la chaleur et/ou à la pression.

12. Feuille composite comprenant une feuille de base calandrée et une couche de plastisol, qui contient des pigments sensibles à la chaleur et/ou à la pression et/ou des matières de charge sensibles à la chaleur et/ou à la pression qui seraient détruit(e)s lors d'un calandrage ou d'une extrusion par les températures élevées nécessaires pour cela et les forces de cisaillement importantes.

13. Feuille composite selon la revendication 12, **caractérisée en ce que** la feuille composite présente un allongement à la rupture d'au moins 100 %, une tension de rupture d'au moins 5 MPa et un module à 10 % d'au moins 10 N/15 mm, respectivement selon la norme DIN EN ISO 527-3/2/2.

14. Feuille composite selon la revendication 12 ou 13, **caractérisée en ce qu'**elle contient des pigments métalliques ou des pigments fluorescents.

15. Feuille composite selon l'une quelconque des revendications 12 à 14, **caractérisée en ce qu'**elle contient, en tant que matières de charge, des perles de verre et/ou des grains de verre, de manière préférée présentant un diamètre moyen supérieur à l'épaisseur de la couche de plastisol gélifiée.
